# EUROPÄISCHE PATENTSCHRIFT

(11) **EP 3 571 675 B1**
(45) Veröffentlichungstag und Bekanntmachung des Hinweises auf die Patenterteilung: **10.05.2023**
(21) Anmeldenummer: 17797933.3
(22) Anmeldetag: 14.11.2017
(51) Int. Cl.: G07C 9/00, B60R 25/24

(54) **VERFAHREN UND STEUERGERÄT ZUR ABSICHERUNG EINES ZUGANGS**
METHOD AND CONTROL DEVICE FOR SAFEGUARDING ACCESS
PROCÉDÉ ET UNITÉ DE CONTRÔLE DE PROTECTION D'ACCÈS

(30) Priorität: 17.01.2017 DE 102017200668
(43) Veröffentlichungstag der Anmeldung: 27.11.2019
(73) Patentinhaber: Bayerische Motoren Werke Aktiengesellschaft, 80809 München (DE)
(72) Erfinder: WAGATHA, Helmut, 85764 Oberschleissheim (DE); KNOBLOCH, Daniel, 80637 München (DE); HOCKE, Fredrik, 80336 München (DE)
(86) Internationale Anmeldenummer: PCT/EP2017/079109
(87) Internationale Veröffentlichungsnummer: WO 2018/133971

(56) Entgegenhaltungen:
- EP-A2- 1 839 072
- DE-A1-102009 044 526
- DE-A1-102014 220 399
- ALRABADY A I ET AL: "Analysis of Attacks Against the Security of Keyless-Entry Systems for Vehicles and Suggestions for Improved Designs", IEEE TRANSACTIONS ON VEHICULAR TECHNOLOGY, IEEE SERVICE CENTER, PISCATAWAY, NJ, US, Bd. 54, Nr. 1, 1. Januar 2005 (2005-01-01) , Seiten 41-50, XP011125756, ISSN: 0018-9545, DOI: 10.1109/TVT.2004.838829

## Beschreibung

Die Erfindung betrifft ein Verfahren und eine entsprechende Steuereinheit zur Absicherung eines schlüssellosen Zugangs, insbesondere zu einem Kraftfahrzeug.

Schlüssellose Zugangsfunktionen zu einem System (z.B. zu einem Kraftfahrzeug) basieren häufig auf der Authentifizierung eines ID-Gebers in einem örtlich begrenzten Bereich. Ein Nutzer trägt einen ID-Geber (z.B. einen Schlüssel) mit sich. Der ID-Geber authentifiziert sich gegenüber einer Zugangskontrolleinheit eines Systems über eine Funkverbindung. Des Weiteren wird über ein geeignetes Funkprotokoll die Entfernung des ID-Gebers zu ein oder mehreren Referenzpunkten des Systems gemessen. Basierend auf dem korrekten Authentifizierungsschlüssel und basierend auf einer definierten Entfernung zu den ein oder mehreren Referenzpunkten des Systems wird dann der Zugang zu dem System gewährt oder verweigert.

Derartige Zugangsfunktionen können anfällig für sogenannte Relay-Angriffe sein. Befindet sich der ID-Geber nicht in der definierten Entfernung zu den ein oder mehreren Referenzpunkten, kann ein Angreifer ein erstes Relay-Gerät in der Nähe des ID-Gebers und ein zweites Relay-Gerät in der Nähe der ein oder mehreren Referenzpunkte platzieren, und ein Funksignal des ID-Gebers über die Relay-Geräte an das System weiterleiten. Dazu kann an beiden Enden der Relaystrecke das Funksignal in einem Frequenzband des ID-Gebers empfangen, über einen separaten (Funk-)Kanal zum jeweils anderen Ende der Relaystrecke übertragen, und an dem jeweiligen Ende der Relaystrecke wieder in dem Frequenzband des ID-Gebers abgestrahlt werden. Dem Funkprotokoll zur Entfernungsmessung kann so der Eindruck vermittelt werden, dass sich der ID-Geber innerhalb der definierten Entfernung zu den ein oder mehreren Referenzpunkten des Systems befindet.

DE 10 2014 220399 A1 beschreibt ein Verfahren, das es ermöglicht, auf Basis der Abweichung der Empfangszeitpunkte von einem HF Signal und von einem LF Signal einen Relay-Angriff zu detektieren. EP 1 839 072 A1 beschreibt ein Verfahren, das es ermöglicht, auf Basis von Übertragungszeiten einen Relay-Angriff zu detektieren.

Das vorliegende Dokument befasst sich mit der technischen Aufgabe, ein effizientes Verfahren zur zuverlässigen Absicherung einer schlüssellosen Zugangsfunktion bereitzustellen.

Die Aufgabe wird jeweils durch die unabhängigen Ansprüche gelöst. Vorteilhafte Ausführungsformen werden u.a. in den abhängigen Ansprüchen beschrieben.

Gemäß einem Aspekt wird ein Verfahren zur Steuerung des Zugangs zu einem System (insbesondere zu einem Fahrzeug) mittels eines ID-Gebers (z.B. mittels eines Funkschlüssels) beschrieben. Dabei wird zur Authentifizierung des ID-Gebers die Entfernung zwischen dem ID-Geber und einem Referenzpunkt des Systems durch Aussenden eines Funksignals überprüft. Typischerweise wird kein Zugang zu dem System gewährt, wenn ermittelt wird, dass sich der ID-Geber in einer Entfernung zum Referenzpunkt des Systems befindet, die größer als ein bestimmter Entfernungs-Schwellenwert (z.B. von 1-3m) ist. Zur Authentifizierung des ID-Gebers kann somit überprüft werden, ob sich der ID-Geber innerhalb einer bestimmten Entfernung zu dem Referenzpunkt des Systems (insbesondere eines Fahrzeugs) befindet. Wenn eine Authentifizierung des ID-Gebers erfolgt ist, kann ein Zugang zu dem System gewährt werden. Insbesondere kann z.B. das Entriegeln einer Tür eines Fahrzeugs und/oder das Starten eines Motors eines Fahrzeugs in Abhängigkeit von der erfolgreichen Authentifizierung des ID-Gebers ermöglicht werden.

Das Funksignal kann ein Funksignal mit einer Reichweite im Bereich von 30-100m aufweisen. Ein beispielhaftes Funksignal ist ein Bluetooth Low Energie (BLE) Funksignal. Das Verfahren umfasst das Empfangen einer ersten Version des Funksignals an einem ersten Zeitpunkt und einer zweiten Version des Funksignals an einem zweiten Zeitpunkt. Dabei weisen beide Versionen des Funksignals einen einheitlichen Identifikator auf, der es einem Empfänger der beiden Versionen des Funksignals ermöglicht, zu erkennen, dass es sich bei den empfangenen Funksignalen um unterschiedliche Versionen bzw. Instanzen des gleichen Funksignals handelt.

Außerdem umfasst das Verfahren das Bestimmen, auf Basis des ersten Zeitpunkts und auf Basis des zweiten Zeitpunkts (insbesondere auf Basis einer Zeitdauer zwischen dem ersten Zeitpunkt und dem zweiten Zeitpunkt), ob es sich bei der zweiten Version des Funksignals um ein im Rahmen eines Relay-Angriffs aus dem Funksignal erzeugtes Relaysignal handelt. Alternativ könnte es sich bei der zweiten Version des Funksignals um eine Reflektion des Funksignals handeln.

Das Bestimmen, ob es sich bei der zweiten Version des Funksignals um ein Relaysignal handelt, umfasst das Ermitteln einer Zeitdauer zwischen dem ersten Zeitpunkt und dem zweiten Zeitpunkt und das Vergleichen der Zeitdauer mit einem Zeit-Schwellenwert. Der Zeit-Schwellenwert kann dabei von typischen Verzögerungszeiten des Funksignals abhängen, die aufgrund von Reflektionen des Funksignals entstehen können.

Es wird bestimmt, dass es sich bei der zweiten Version des Funksignals um ein Relaysignal handelt, wenn die Zeitdauer größer als der Zeit-Schwellenwert ist. Andererseits kann bestimmt werden, dass es sich bei der zweiten Version des Funksignals nicht um ein Relaysignal handelt und/oder dass es sich bei der zweiten Version des Funksignals um eine Reflektion des Funksignals handelt, wenn die Zeitdauer kleiner als der Zeit-Schwellenwert ist. So kann in effizienter und zuverlässiger Weise das Vorliegen eines Relay-Angriffs detektiert werden.

Das Verfahren kann umfassen, das Ermitteln einer ersten Signalstärke der ersten Version des Funksignals und einer zweiten Signalstärke der zweiten Version des Funksignals. Es kann dann auch auf Basis der ersten Signalstärke und auf Basis der zweiten Signalstärke bestimmt werden, ob es sich bei der zweiten Version des Funksignals um ein Relaysignal handelt oder nicht. Insbesondere kann ermittelt werden, ob die erste Signalstärke kleiner als die zweite Signalstärke ist, und ob der zweite Zeitpunkt auf den ersten Zeitpunkt folgt. Wenn dies der Fall ist, so kann in zuverlässiger bestimmt werden, dass es sich bei der zweiten Version des Funksignals um ein Relaysignal handelt (da typischerweise ein reflektiertes Funksignal eine gegenüber dem direkt empfangenen Funksignal reduzierte Signalstärke aufweisen sollte).

Außerdem umfasst das Verfahren das Veranlassen einer Maßnahme, um den Zugang zu dem System zu unterbinden, wenn bestimmt wird, dass es sich bei der zweiten Version des Funksignals um ein Relaysignal handelt (auch wenn ermittelt wird, dass sich der ID-Geber innerhalb der zulässigen Entfernung zu dem Referenzpunkt des Systems befindet). Somit kann in effizienter und zuverlässiger Weise die Sicherheit einer schlüssellosen Zugangsfunktion zu einem System erhöht werden.

Das Funksignal kann ein Anfragesignal umfassen, das von einer Sendeeinheit des Systems an den ID-Geber gesendet wird (z.B. über eine BLE Funkprotokoll). Die Sendeeinheit kann an dem Referenzpunkt des Systems angeordnet sein. Eine Signalstärke des am ID-Geber empfangenen Anfragesignals kann dazu verwendet werden, die Entfernung zwischen dem ID-Geber und dem Referenzpunkt zu bestimmen. Information in Bezug auf die Signalstärke bzw. in Bezug auf die Entfernung kann dann mit einem Antwortsignal von dem ID-Geber an eine Empfangseinheit des Systems gesendet werden.

Das in diesem Dokument beschriebene Verfahren kann somit zumindest teilweise durch den ID-Geber ausgeführt werden. Das Veranlassen einer Maßnahme zum Unterbinden des Zugangs zu dem System kann dann umfassen, das Unterbinden des Aussendens eines Antwortsignals in Reaktion auf das Anfragesignal. Bei Ausbleiben eines Antwortsignals kann der ID-Geber nicht durch das System authentifiziert werden. Als Folge daraus kann ein Zugang zu dem System unterbunden werden.

Alternativ oder ergänzend kann das Funksignal ein Antwortsignal (z.B. im HF-Frequenzbereich) umfassen, das von dem ID-Geber in Reaktion auf ein Anfragesignal einer Sendeeinheit des Systems an das System gesendet wird. Das Verfahren kann dann zumindest teilweise durch das System ausgeführt werden. Das Veranlassen einer Maßnahme zum Unterbinden des Zugangs kann dann umfassen, das Verwerfen der Authentifizierung des ID-Gebers (auch wenn ermittelt wurde, dass sich der ID-Geber in zuverlässiger Entfernung zu dem Referenzpunkt befindet) und/oder das Ausgeben eines Hinweises über eine Ausgabeeinheit (z.B. über einen Lautsprecher) des Systems.

Gemäß einem weiteren Aspekt wird eine Steuereinheit beschrieben, die eingerichtet ist, das in diesem Dokument beschriebene Verfahren auszuführen.

Gemäß einem weiteren Aspekt werden ein Fahrzeug (insbesondere ein Straßenkraftfahrzeug z.B. ein Personenkraftwagen, ein Lastkraftwagen oder ein Motorrad) und/oder ein ID-Geber beschrieben, die die in diesem Dokument beschriebene Steuereinheit umfassen.

Gemäß einem weiteren Aspekt wird ein Software (SW) Programm beschrieben. Das SW Programm kann eingerichtet werden, um auf einem Prozessor ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1a ein beispielhaftes Fahrzeug mit einer Zugangskontrollfunktion;
Figur 1b einen beispielhaften ID-Geber;
Figur 2 ein Scenario eines beispielhaften Relay-Angriffs; und
Figur 3 ein Ablaufdiagramm eines beispielhaften Verfahrens zur Kontrolle des Zugangs zu einem System, insbesondere zu einem Kraftfahrzeug.

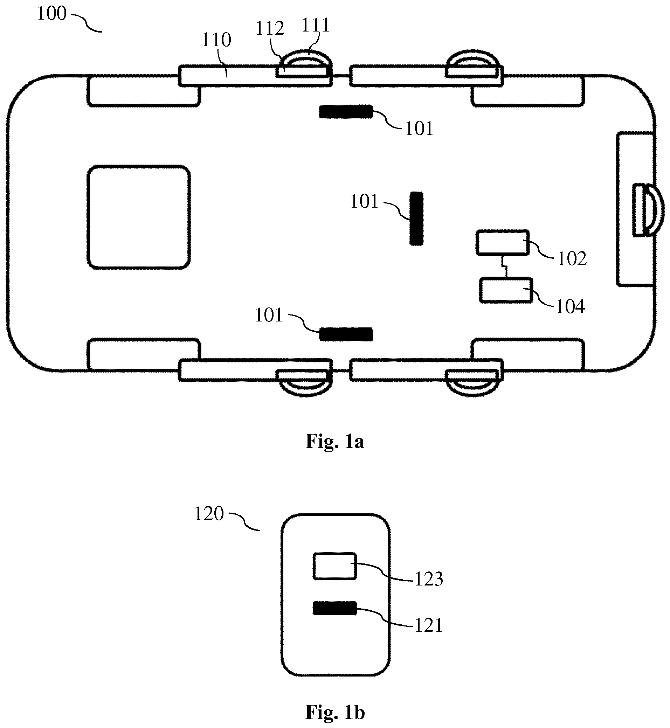

Wie eingangs dargelegt, befasst sich das vorliegende Dokument mit der Bereitstellung einer schlüssellosen Zugangsfunktion, die in zuverlässiger Weise vor Relay-Angriffen geschützt ist. Fig. 1a zeigt ein beispielhaftes Fahrzeug 100 und Fig. 1b zeigt einen beispielhaften ID-Geber 120, die eine schlüssellose Zugangsfunktion bereitstellen. Eine schlüssellose Zugangsfunktion erlaubt es einem Fahrer eines Fahrzeugs 100, ohne Benutzung des Schlüssel-Schloss-Prinzips, eine Fahrzeugtür 110 zu öffnen oder den Motor des Fahrzeugs 100 zu starten. Zum Öffnen der Tür 110 greift der Fahrer zum Türgriff 111. Ein Annäherungssensor 112 am oder in der Nähe des Türgriffs 111 erfasst diese Bewegung. Daraufhin wird ein spezifisches Funksignal (z.B. im LF, Low Frequency, Bereich oder mit einem Bluetooth Low Energie, BLE, Funkprotokoll) über ein oder mehrere Sendeeinheiten 101 des Fahrzeugs 100 versandt. Dieses Funksignal kann auch als Anfragesignal bezeichnet werden. Mit anderen Worten, die ein oder mehreren Sendeeinheiten 101 können eingerichtet sein, ein elektromagnetisches Feld, d.h. das Anfragesignal, auszusenden. Beispielhafte Sendefrequenzen der ein oder mehreren Sendeeinheiten 101 liegen im Frequenzbereich von 20-140kHz (z.B. 20 kHz, 124kHz, 125kHz, 127 kHz, 133kHz oder 135kHz). Alternativ können Frequenzen im Bereich von 2.4 GHz (z.B. bei Verwendung von BLE) verwendet werden (um höhere Reichweiten zu ermöglichen).

Das von den ein oder mehreren Sendeeinheiten 101 ausgesendete elektromagnetische Feld umfasst das Anfragesignal. Das ausgesendete Anfragesignal kann mehrere Teile umfassen. Ein erster Teil des Anfragesignals kann darauf ausgelegt sein, eine Empfangseinheit 123 in einem ID-Geber 120 (z.B. einem Schlüssel) des Fahrers aufzuwecken, d.h. für den Empfang weiterer Informationen vorzubereiten. Ein weiterer Teil des Anfragesignals kann Informationen zur Identifikation des Fahrzeugs 100 und/oder zur eindeutigen Identifikation des Anfragesignals umfassen. Die verschiedenen Teile des von den ein oder mehreren Sendeeinheiten 101 ausgesendeten Anfragesignals können zeitversetzt gesendet werden.

Die Empfangseinheit 123 im ID-Geber 120 ist eingerichtet, die von den ein oder mehreren Sendeeinheiten 101 gesendeten Signale oder Signalteile zu empfangen und die Signalstärke oder Feldstärke der Signale oder Signalteile zu ermitteln. Eine Sendeeinheit 121 des ID-Gebers 120 antwortet auf das empfangene Anfragesignal mit einem Antwortsignal. Das Antwortsignal kann in einem anderen Frequenzbereich übertragen werden als das Anfragesignal. Beispielsweise kann das Antwortsignal mit einer Antwortfrequenz von 433MHz (d.h. im HF (High Frequency) Bereich) übertragen werden. Alternativ können Frequenzen im Bereich von 2.4 GHz (z.B. bei Verwendung von BLE) verwendet werden.

Das Antwortsignal kann aus mehreren Teilen bestehen. Ein erster Teil des Antwortsignals kann der Identifikation des ID-Gebers 120 dienen und ein weiterer Teil des Antwortsignals kann Information für die gemessene Signalstärke des Anfragesignals umfassen. Ein oder mehrere Empfangseinheiten 104 des Fahrzeugs 100 können das Antwortsignal und/oder die Antwortsignal-Teile empfangen und an eine Steuereinheit 102 des Fahrzeugs 100 weiterleiten. Die Steuereinheit 102 kann eingerichtet sein, zu überprüfen, ob der ID-Geber 120 zum Fahrzeug 100 passt. Des Weiteren kann über Triangulation bzw. über eine Look-Up-Tabelle die Position des ID-Gebers 120 relativ zum Fahrzeug 100 berechnet werden (auf Basis der gemessenen Signalstärken einer Vielzahl von Anfragesignalen). Passt die abgeschätzte Position des ID-Gebers 120 mit der Position des Annäherungssensors 112 (z.B. Umgebung der berührten Tür 110 und/oder des berührten Türgriffs 111) überein, so werden die Tür 110 und/oder das gesamte Fahrzeug 100 geöffnet. Es ist somit eine Authentifizierung des ID-Gebers 120 erfolgt.

Wie in Fig. 1a dargestellt, umfasst das Fahrzeug 100 typischerweise eine Vielzahl von Sendeeinheiten 101. Die Sendeeinheiten 101 können an unterschiedlichen Stellen (d.h. Referenzpunkten) im Fahrzeug 100 angeordnet sein. Jede Sendeeinheit 101 der Vielzahl von Sendeinheiten 101 kann ein Anfragesignal (z.B. einen Signalpuls) versenden. Die Anfragesignale können zeitlich zueinander versetzt sein, und ggf. eine vordefinierte Reihenfolge aufweisen. Alternativ oder ergänzend können die Anfragesignale eine eindeutige Kennung bzw. Identifikator aufweisen. Der ID-Geber 120 und/oder die Empfangseinheit 104 des Fahrzeugs 100 können mittels der Kennung bzw. des Identifikators und/oder mittels der Reihenfolge die Anfragesignale eindeutig jeweils einer Sendeeinheit 101 der Vielzahl von Sendeeinheiten 101 zuordnen. Somit können die jeweilige Signalstärke der einzelnen Anfragesignale und damit auch der jeweilige Abstand zwischen Sendeeinheit 101 (d.h. Referenzpunkt) und ID-Geber 120 ermittelt werden. Da sich die Sendeeinheiten 101 an unterschiedlichen Stellen (d.h. Referenzpunkten) im Fahrzeug 100 befinden, ergibt sich somit eine Vielzahl von Abständen für die entsprechende Vielzahl von Sendeeinheiten 101. Anhand von Triangulationsverfahren kann so die Relativposition zwischen Fahrzeug 100 und ID-Geber 120 bestimmt werden. Ggf. kann auch eine Orientierung des Fahrzeugs 100 in Bezug auf den ID-Geber 120 bestimmt werden.

Die oben genannte Prozedur zum Identitätsabgleich / Positionsabgleich zwischen Fahrzeug 100 und ID-Geber 120 nimmt typischerweise einen Zeitraum von ca. 100ms in Anspruch. D.h. die o.g. Prozedur bleibt aufgrund des geringen Zeitraums für den Fahrer typischerweise unbemerkt, so dass der Fahrer mit dem Griff zum Türgriff 111 direkt die Tür 110 öffnen kann. Eine analoge Prozedur zum Identitätsabgleich / Positionsabgleich erfolgt typischerweise auch beim Motorstart.

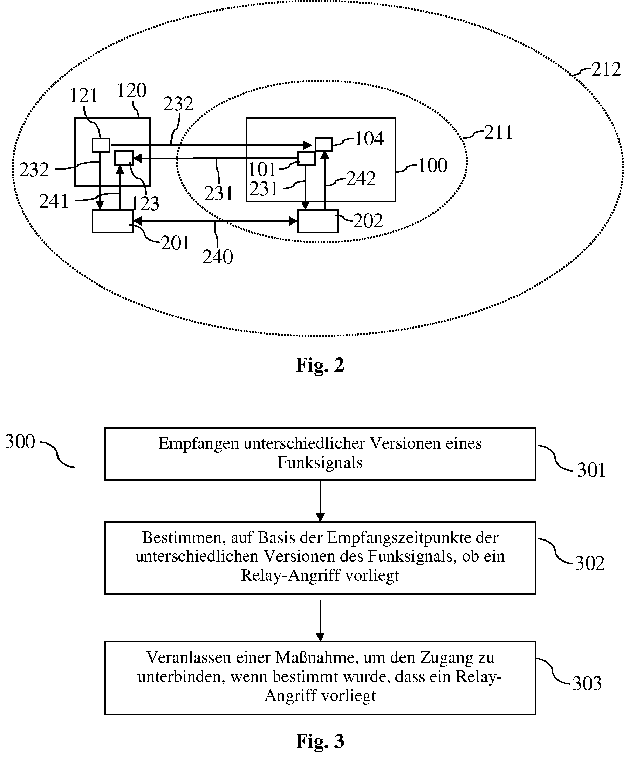

Fig. 2 zeigt ein Scenario für einen Relay-Angriff, bei dem ein erstes Relay-Gerät 201 in der Nähe des ID-Gebers 120 angeordnet ist und bei dem ein zweites Relay-Gerät 202 in der Nähe des Fahrzeugs 100 angeordnet ist. In dem in Fig. 2 dargestellten Beispiel ist für die Authentifizierung eines ID-Gebers 120 eine maximale Entfernung 211 zwischen ID-Geber 120 und Fahrzeug 100 zulässig. Des Weiteren weist und ein zwischen Fahrzeug 100 und ID-Geber 120 ausgetauschtes Funksignals 231, 232 (z.B. ein Anfragesignal 231 oder ein Antwortsignal 232) eine Reichweite 212 auf.

Das von einer Sendeeinheit 101 des Fahrzeugs 100 ausgesendete Anfragesignal 231 kann von dem zweiten Relay-Gerät 202 empfangen und über eine Relay-Funkstrecke 240 an das erste Relay-Gerät 201 weitergeleitet werden. Es kann dann ein dem Anfragesignal 231 entsprechendes Relaysignals 241 von dem ersten Relay-Gerät 201 ausgesendet und von der Empfangseinheit 123 des ID-Gebers 120 empfangen werden. Die Sendeeinheit 121 des ID-Gebers 120 kann daraufhin ein Antwortsignal 232 aussenden, dass von dem ersten Relay-Gerät 201 empfangen und über die Relay-Funkstrecke 240 an das zweite Relay-Gerät 202 weitergeleitet werden kann. Das zweite Relay-Gerät 202 kann dann ein dem Antwortsignal 232 entsprechendes Relaysignal 242 aussenden, das von der Empfangseinheit 104 des Fahrzeugs 100 empfangen werden kann. So kann dem Fahrzeug 100 der Eindruck erweckt werden, dass sich der ID-Geber 120 in unmittelbarer Nähe (d.h. innerhalb der maximalen Entfernung 211) des Fahrzeugs 100 befindet.

Eine Möglichkeit einen derartigen Relay-Angriff zu detektieren, ist die Verwendung einer Time-of-Flight Messung. Dabei kann die Zeit gemessen werden, die ein Funksignal 231, 232 zwischen ID-Geber 120 und Fahrzeug 100 benötigt. Aufgrund der Verarbeitung innerhalb der Relay-Geräte 201, 202 kommt es bei der Übertragung eines entsprechenden Relaysignals 241, 242 über die Relay-Funkstrecke 240 typischerweise zu Verzögerungen, die am ID-Geber 120 und/oder am Fahrzeug 100 detektiert werden können. Derartige Messungen der Time-of-Flight eines Funksignals sind jedoch typischerweise relativ aufwendig.

Bei Funkprotokollen zur Entfernungsmessung mit einer relativ hohen Reichweite 212 kommt es typischerweise dazu, dass im Falle eines Relay-Angriffs der ID-Geber 120 und/oder das Fahrzeug 100 sowohl das direkte Funksignals 231, 232 als auch das Relaysignal 241, 242 empfangen. Insbesondere kann der ID-Geber 120 sowohl das direkte Anfragesignal 231 als auch das entsprechende Relaysignal 241 empfangen. Alternativ oder ergänzend kann das Fahrzeug 100 sowohl das direkte Antwortsignal 232 als auch das entsprechende Relaysignal 242 empfangen. Der Empfang von (mindestens) zwei Versionen eines Funksignals kann von der empfangenden Einheit 100, 120 dazu verwendet werden, eine Relay-Attacke zu detektieren.

Wie bereits oben dargelegt, kann die Empfangseinheit 123 im ID-Geber 120 eingerichtet sein, die Signalstärke oder Feldstärke eines empfangenen Anfragesignals 231 zu ermitteln. Werden mehrere Versionen eines Anfragesignals 231 empfangen, so kann ggf. die Version des Anfragesignals 231 mit der geringeren Signalstärke (und folglich mit der höheren Entfernung) als Reflektion der Version des Anfragesignals 231 mit der höheren Signalstärke (und folglich mit der höheren Entfernung) betrachtet werden.

Um die Reflektion eines Anfragesignals 231 von der Erzeugung eines Relaysignals 241 unterscheiden zu können, kann der Zeitraum zwischen dem ersten Empfangszeitpunkt einer ersten Version des Anfragesignals 231 (mit einem bestimmten Identifikator) und dem zweiten Empfangszeitpunkt einer zweiten Version des Anfragesignals 231 (mit dem bestimmten Identifikator) betrachtet werden. Wird zeitverzögert zwei Mal das gleiche Funksignal 231 mit dem gleichen Identifikator empfangen, kann anhand eines Zeit-Schwellenwerts für eine plausible Zeitdauer einer Reflektion entschieden werden, ob es sich bei dem doppelten Empfang um eine Reflektion handeln kann oder nicht. Ist die Zeitdauer zu groß, so kann von einer Relay-Attacke ausgegangen werden und der ID-Geber 120 kann entsprechend reagieren (z.B. Unterbinden des Aussendens eines Antwortsignals 232).

In entsprechender Weise kann das Fahrzeug 100 bei mehrmaligem Empfang eines Antwortsignals 232 mit dem gleichen Identifikator durch Ermittlung der Zeitdauer zwischen dem Empfang der beiden Versionen des Antwortsignals 232 und durch Vergleich mit einem Zeit-Schwellenwert ermitteln, ob es sich bei dem mehrmaligen Empfang um eine Reflektion oder um einen Relay-Angriff handelt. Bei Vorliegen eines Relay-Angriffs kann das Fahrzeug 100 entsprechend reagieren (z.B. Ausgeben einer Warnung und/oder Verwerfen der Authentifizierung des ID-Gebers 120).

Fig. 3 zeigt ein Ablaufdiagramm eines beispielhaften Verfahrens 300 zur Steuerung des Zugangs zu einem System 100 mittels eines ID-Gebers 120. Dabei kann es sich bei dem System 100 um ein Fahrzeug handeln. Insbesondere kann die Entriegelung einer Tür 111 eines Fahrzeugs und/oder der Start eines Motors des Fahrzeugs gesteuert werden. Zur Authentifizierung des ID-Gebers 120 kann die Entfernung zwischen dem ID-Geber 120 und einem Referenzpunkt des Systems 100 (z.B. einer Sendeeinheit 101) durch Aussenden eines Funksignals 231, 232 überprüft werden. Beispielsweise kann ein Anfragesignal 231 von einer Sendeeinheit 101 des Systems 100 an den ID-Geber 120 ausgesendet werden. Alternativ oder ergänzend kann ein Antwortsignal 232 von dem ID-Geber 120 an das System 100 gesendet werden.

Das Verfahren 300 umfasst das Empfangen 301 einer ersten Version des Funksignals 231, 232 an einem ersten (Empfangs-)Zeitpunkt und einer zweiten Version des Funksignals 231, 232 an einem zweiten (Empfangs-)Zeitpunkt. Dabei können beide Versionen des Funksignals 231, 232 den gleichen Identifikator aufweisen.

Außerdem umfasst das Verfahren 300 das Bestimmen 302, auf Basis des ersten Zeitpunkts und auf Basis des zweiten Zeitpunkts, ob es sich bei der zweiten Version des Funksignals 231, 232 um ein im Rahmen eines Relay-Angriffs aus dem Funksignal 231, 232 erzeugtes Relaysignal 241, 242 handelt oder nicht. Insbesondere kann auf Basis der Zeitdauer zwischen dem ersten Zeitpunkt und dem zweiten Zeitpunkt ermittelt werden, ob es sich bei der zweiten Version des Funksignals 231, 232 um ein Relaysignal 241, 242 handelt oder nicht.

Das Verfahren 300 umfasst weiter das Veranlassen 303 einer Maßnahme, um den Zugang zu dem System 100 zu unterbinden, wenn bestimmt wird, dass es sich bei der zweiten Version des Funksignals 231, 232 um ein Relaysignal 241, 242 handelt (auch wenn ermittelt wird, dass sich der ID-Geber 120 in einer zulässigen Entfernung zu dem Referenzpunkt befindet).

Das Verfahren 300 ermöglicht somit einen zuverlässigen und effizienten Schutz vor Relay-Angriffen für schlüssellose Zugangsfunktionen, insbesondere bei Verwendung von Long Range Funktechnologien, wie z.B. BLE (Bluetooth Low Energie), für die Übertragung der Funksignals 231, 232 (von dem System 100 zum ID-Geber 120 und/oder von dem ID-Geber 120 zu dem System 100).

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Verfahren (300) zur Steuerung des Zugangs zu einem System (100) mittels eines ID-Gebers (120), wobei zur Authentifizierung des ID-Gebers (120) eine Entfernung zwischen dem ID-Geber (120) und einem Referenzpunkt des Systems (100) durch Aussenden eines Funksignals (231, 232) überprüft wird; wobei das Verfahren (300) umfasst,
- Empfangen (301) einer ersten Version des Funksignals (231, 232) an einem ersten Zeitpunkt und einer zweiten Version des Funksignals (231, 232) an einem zweiten Zeitpunkt; wobei die erste Version und die zweite Version des Funksignals (231, 232) einen einheitlichen Indikator aufweisen;
- Erkennen, auf Basis des Indikators, dass es sich bei der ersten Version des Funksignals (231, 232) und bei der zweiten Version des Funksignals (231, 232) um unterschiedliche Instanzen des gleichen Funksignals (231, 232) handelt;
- Ermitteln einer Zeitdauer zwischen dem ersten Zeitpunkt und dem zweiten Zeitpunkt;
- Vergleichen der Zeitdauer mit einem Zeit-Schwellenwert;
- Bestimmen (302), auf Basis des ersten Zeitpunkts und auf Basis des zweiten Zeitpunkts, ob es sich bei der zweiten Version des Funksignals (231, 232) um ein im Rahmen eines Relay-Angriffs aus dem Funksignal (231, 232) erzeugtes Relaysignal (241, 242) oder um eine Reflektion des Funksignals (231,232) handelt; wobei bestimmt wird, dass es sich bei der zweiten Version des Funksignals (231, 232) um ein Relaysignal (241, 242) handelt, wenn die Zeitdauer größer als der Zeit-Schwellenwert ist; wobei bestimmt wird, dass es sich bei der zweiten Version des Funksignals (231, 232) nicht um ein Relaysignal (241, 242) handelt, wenn die Zeitdauer kleiner als der Zeit-Schwellenwert ist; und
- Veranlassen (303) einer Maßnahme, um den Zugang zu dem System (100) zu unterbinden, wenn bestimmt wird, dass es sich bei der zweiten Version des Funksignals (231, 232) um ein Relaysignal (241, 242) handelt.

2. Verfahren (300) gemäß Anspruch 1, wobei
- bestimmt wird, dass es sich bei der zweiten Version des Funksignals (231, 232) um eine Reflektion des Funksignals (231, 232) handelt, wenn die Zeitdauer kleiner als der Zeit-Schwellenwert ist.

3. Verfahren (300) gemäß einem der vorhergehenden Ansprüche, wobei
- das Verfahren (300) umfasst, Ermitteln einer ersten Signalstärke der ersten Version des Funksignals (231, 232) und einer zweiten Signalstärke der zweiten Version des Funksignals (231, 232); und
- auch auf Basis der ersten Signalstärke und auf Basis der zweiten Signalstärke bestimmt wird, ob es sich bei der zweiten Version des Funksignals (231, 232) um ein Relaysignal (241, 242) handelt.

4. Verfahren (300) gemäß Anspruch 3, wobei das Bestimmen (302), ob es sich bei der zweiten Version des Funksignals (231, 232) um ein Relaysignal (241, 242) handelt, umfasst,
- Ermitteln, ob die erste Signalstärke kleiner als die zweite Signalstärke ist; und
- Ermitteln, ob der zweite Zeitpunkt auf den ersten Zeitpunkt folgt.

5. Verfahren (300) gemäß einem der vorhergehenden Ansprüche, wobei
- das Funksignal (231, 232) ein Anfragesignal (231) umfasst, das von einer Sendeeinheit (101) des Systems (100) an den ID-Geber (120) gesendet wird; und
- das Verfahren (300) zumindest teilweise durch den ID-Geber (120) ausgeführt wird.

6. Verfahren (300) gemäß Anspruch 5, wobei das Veranlassen (303) einer Maßnahme umfasst, Unterbinden des Aussendens eines Antwortsignals (232) auf das Anfragesignal (231).

7. Verfahren (300) gemäß einem der vorhergehenden Ansprüche, wobei
- das Funksignal (231, 232) ein Antwortsignal (232) umfasst, das von dem ID-Geber (120) in Reaktion auf ein Anfragesignal (231) einer Sendeeinheit (101) des Systems (100) an das System (100) gesendet wird, und
- das Verfahren (300) zumindest teilweise durch das System (100) ausgeführt wird.

8. Verfahren (300) gemäß Anspruch 7, wobei das Veranlassen (303) einer Maßnahme umfasst,
- Verwerfen der Authentifizierung des ID-Gebers (120); und/oder
- Ausgeben eines Hinweises über eine Ausgabeeinheit des Systems (100).

9. Verfahren (300) gemäß einem der vorhergehenden Ansprüche, wobei
- das System (100) ein Fahrzeug umfasst; und/oder
- der Zugang zu dem System (100) das Entriegeln einer Tür (110) des Fahrzeugs und/oder das Starten eines Motors des Fahrzeugs umfasst.

10. Steuereinheit (101) zur Steuerung des Zugangs zu einem System (100) mittels eines ID-Gebers (120), wobei zur Authentifizierung des ID-Gebers (120) eine Entfernung zwischen dem ID-Geber (120) und einem Referenzpunkt des Systems (100) durch Aussenden eines Funksignals (231, 232) überprüft wird; wobei die Steuereinheit (101) eingerichtet ist,
- eine erste Version des Funksignals (231, 232) an einem ersten Zeitpunkt und eine zweite Version des Funksignals (231, 232) an einem zweiten Zeitpunkt zu empfangen; wobei die erste Version und die zweite Version des Funksignals (231, 232) einen einheitlichen Indikator aufweisen;
- auf Basis des Indikators zu erkennen, dass es sich bei der ersten Version des Funksignals (231, 232) und bei der zweiten Version des Funksignals (231, 232) um unterschiedliche Instanzen des gleichen Funksignals (231, 232) handelt;
- eine Zeitdauer zwischen dem ersten Zeitpunkt und dem zweiten Zeitpunkt zu ermitteln;
- die Zeitdauer mit einem Zeit-Schwellenwert zu vergleichen;
- auf Basis des ersten Zeitpunkts und auf Basis des zweiten Zeitpunkts zu bestimmen, ob es sich bei der zweiten Version des Funksignals (231, 232) um ein im Rahmen eines Relay-Angriffs aus dem Funksignal (231, 232) erzeugtes Relaysignal (241, 242) oder um eine Reflektion des Funksignals (231,232) handelt; wobei bestimmt wird, dass es sich bei der zweiten Version des Funksignals (231, 232) um ein Relaysignal (241, 242) handelt, wenn die Zeitdauer größer als der Zeit-Schwellenwert ist; wobei bestimmt wird, dass es sich bei der zweiten Version des Funksignals (231, 232) nicht um ein Relaysignal (241, 242) handelt, wenn die Zeitdauer kleiner als der Zeit-Schwellenwert ist; und
- eine Maßnahme zu veranlassen, um den Zugang zu dem System (100) zu unterbinden, wenn bestimmt wird, dass es sich bei der zweiten Version des Funksignals (231, 232) um ein Relaysignal (241, 242) handelt.

## Claims

1. Method (300) for controlling the access to a system (100) by means of an ID transmitter (120), wherein the ID transmitter (120) is authenticated by virtue of a distance between the ID transmitter (120) and a reference point in the system (100) being checked by transmitting a radio signal (231, 232); wherein the method (300) comprises
- receiving (301) a first version of the radio signal (231, 232) at a first time and a second version of the radio signal (231, 232) at a second time, the first version and the second version of the radio signal (231, 232) having a consistent indicator;
- identifying, on the basis of the indicator, that the first version of the radio signal (231, 232) and the second version of the radio signal (231, 232) are different instances of the same radio signal (231, 232);
- ascertaining a period of time between the first time and the second time;
- comparing the period of time with a time threshold value;
- determining (302), on the basis of the first time and on the basis of the second time, whether the second version of the radio signal (231, 232) is a relay signal (241, 242) generated from the radio signal (231, 232) as part of a relay attack or is a reflection of the radio signal (231, 232); wherein it is determined that the second version of the radio signal (231, 232) is a relay signal (241, 242) if the period of time is above the time threshold value; wherein it is determined that the second version of the radio signal (231, 232) is not a relay signal (241, 242) if the period of time is below the time threshold value; and
- prompting (303) a measure to prevent the access to the system (100) if it is determined that the second version of the radio signal (231, 232) is a relay signal (241, 242).

2. Method (300) according to Claim 1, wherein
- it is determined that the second version of the radio signal (231, 232) is a reflection of the radio signal (213, 232) if the period of time is below the time threshold value.

3. Method (300) according to either of the preceding claims, wherein
- the method (300) comprises ascertaining a first signal strength of the first version of the radio signal (231, 232) and a second signal strength of the second version of the radio signal (231, 232); and
- the first signal strength and the second signal strength are also taken as a basis for determining whether the second version of the radio signal (231, 232) is a relay signal (241, 242) .

4. Method (300) according to Claim 3, wherein the determining (302) of whether the second version of the radio signal (231, 232) is a relay signal (241, 242) comprises
- ascertaining whether the first signal strength is below the second signal strength; and
- ascertaining whether the second time follows the first time.

5. Method (300) according to one of the preceding claims, wherein
- the radio signal (231, 232) comprises an enquiry signal (231) sent from a transmission unit (101) of the system (100) to the ID transmitter (120); and
- at least part of the method (300) is carried out by the ID transmitter (120).

6. Method (300) according to Claim 5, wherein the prompting (303) of a measure comprises preventing the transmission of a response signal (232) for the enquiry signal (231).

7. Method (300) according to one of the preceding claims, wherein
- the radio signal (231, 232) comprises a response signal (232) sent from the ID transmitter (120) to the system (100) in reaction to an enquiry signal (231) from a transmission unit (101) of the system (100); and
- at least part of the method (300) is carried out by the system (100).

8. Method (300) according to Claim 7, wherein the prompting (303) of a measure comprises
- rejecting the authentication of the ID transmitter (120); and/or
- outputting advice via an output unit of the system (100).

9. Method (300) according to one of the preceding claims, wherein
- the system (100) comprises a vehicle; and/or
- the access to the system (100) comprises the unlocking of a door (110) of the vehicle and/or the starting of an engine of the vehicle.

10. Control unit (101) for controlling the access to a system (100) by means of an ID transmitter (120), wherein the ID transmitter (120) is authenticated by virtue of a distance between the ID transmitter (120) and a reference point in the system (100) being checked by transmitting a radio signal (231, 232); wherein the control unit (101) is configured
- to receive a first version of the radio signal (231, 232) at a first time and a second version of the radio signal (231, 232) at a second time, the first version and the second version of the radio signal (231, 232) having a consistent indicator;
- to identify, on the basis of the indicator, that the first version of the radio signal (231, 232) and the second version of the radio signal (231, 232) are different instances of the same radio signal (231, 232);
- to ascertain a period of time between the first time and the second time;
- to compare the period of time with a time threshold value;
- to determine, on the basis of the first time and on the basis of the second time, whether the second version of the radio signal (231, 232) is a relay signal (241, 242) generated from the radio signal (231, 232) as part of a relay attack or is a reflection of the radio signal (231, 232); wherein it is determined that the second version of the radio signal (231, 232) is a relay signal (241, 242) if the period of time is above the time threshold value; wherein it is determined that the second version of the radio signal (231, 232) is not a relay signal (241, 242) if the period of time is below the time threshold value; and
- to prompt a measure to prevent the access to the system (100) if it is determined that the second version of the radio signal (231, 232) is a relay signal (241, 242).

## Revendications

1. Procédé (300) de commande de l'accès à un système (100) au moyen d'un transmetteur d'ID (120), une distance entre le transmetteur d'ID (120) et un point de référence du système (100) étant vérifiée en vue d'authentifier le transmetteur d'ID (120) par émission d'un signal radioélectrique (231, 232) ; le procédé (300) comprenant les étapes suivantes :
- réception (301) d'une première version du signal radioélectrique (231, 232) à un premier instant et d'une deuxième version du signal radioélectrique (231, 232) à un deuxième instant, la première version et la deuxième version du signal radioélectrique (231, 232) possédant un indicateur uniforme ;
- reconnaissance, sur la base de l'indicateur, que la première version du signal radioélectrique (231, 232) et la deuxième version du signal radioélectrique (231, 232) sont des instances différentes du même signal radioélectrique (231, 232) ;
- identification d'une durée entre le premier instant et le deuxième instant ;
- comparaison de la durée avec une valeur de seuil de temps ;
- détermination (302), sur la base du premier instant et sur la base du deuxième instant, si la deuxième version du signal radioélectrique (231, 232) est un signal de relais (241, 242) généré dans le cadre d'une attaque par relais provenant du signal radioélectrique (231, 232) ou d'une réflexion du signal radioélectrique (231, 232) ; la deuxième version du signal radioélectrique (231, 232) étant déterminée être un signal de relais (241, 242) lorsque la durée est supérieure à la valeur de seuil de temps et la deuxième version du signal radioélectrique (231, 232) étant déterminée ne pas être un signal de relais (241, 242) lorsque la durée est inférieure à la valeur de seuil de temps ; et
- initiation (303) d'une mesure afin d'empêcher l'accès au système (100) lorsqu'il est déterminé que la deuxième version du signal radioélectrique (231, 232) est un signal de relais (241, 242).

2. Procédé (300) selon la revendication 1,
- la deuxième version du signal radioélectrique (231, 232) étant déterminée être une réflexion du signal radioélectrique (231, 232) lorsque la durée est inférieure à la valeur de seuil de temps.

3. Procédé (300) selon l'une des revendications précédentes,
- le procédé (300) comprenant l'identification d'une première intensité de signal de la première version du signal radioélectrique (231, 232) et d'une deuxième intensité de signal de la deuxième version du signal radioélectrique (231, 232) ; et
- la deuxième version du signal radioélectrique (231, 232) étant également déterminée être ou non un signal de relais (241, 242) sur la base de la première intensité de signal et sur la base de la deuxième intensité de signal.

4. Procédé (300) selon la revendication 3, la détermination (302) si la deuxième version du signal radioélectrique (231, 232) est ou non un signal de relais (241, 242) comprenant
- identification si la première intensité de signal est inférieure à la deuxième intensité de signal ; et
- identification si le deuxième instant suit le premier instant.

5. Procédé (300) selon l'une des revendications précédentes,
- le signal radioélectrique (231, 232) comprenant un signal d'interrogation (231) qui est émis au transmetteur d'ID (120) par une unité d'émission (101) du système (100) ; et
- le procédé (300) étant au moins partiellement mis en œuvre par le transmetteur d'ID (120).

6. Procédé (300) selon la revendication 5, l'initiation (303) d'une mesure comprenant l'empêchement de l'émission d'un signal de réponse (232) au signal d'interrogation (231) .

7. Procédé (300) selon l'une des revendications précédentes,
- le signal radioélectrique (231, 232) comprenant un signal de réponse (232) qui est émis vers le système (100) par le transmetteur d'ID (120) en réaction à un signal d'interrogation (231) d'une unité d'émission (101) du système (100) ;
- le procédé (300) étant au moins partiellement mis en œuvre par le système (100).

8. Procédé (300) selon la revendication 7, l'initiation (303) d'une mesure comprenant
- rejet de l'authentification du transmetteur d'ID (120) ; et/ou
- délivrance d'une notification par le biais d'une unité de sortie du système (100).

9. Procédé (300) selon l'une des revendications précédentes,
- le système (100) comprenant un véhicule ; et/ou
- l'accès au système (100) comprenant le déverrouillage d'une portière (110) du véhicule et/ou le démarrage d'un moteur du véhicule.

10. Unité de commande (101) destinée à commander l'accès à un système (100) au moyen d'un transmetteur d'ID (120), une distance entre le transmetteur d'ID (120) et un point de référence du système (100) étant vérifiée en vue d'authentifier le transmetteur d'ID (120) par émission d'un signal radioélectrique (231, 232) ; l'unité de commande (101) étant conçue pour :
- recevoir une première version du signal radioélectrique (231, 232) à un premier instant et une deuxième version du signal radioélectrique (231, 232) à un deuxième instant, la première version et la deuxième version du signal radioélectrique (231, 232) possédant un indicateur uniforme ;
- sur la base de l'indicateur, reconnaître que la première version du signal radioélectrique (231, 232) et la deuxième version du signal radioélectrique (231, 232) sont des instances différentes du même signal radioélectrique (231, 232) ;
- identifier une durée entre le premier instant et le deuxième instant ;
- comparer la durée avec une valeur de seuil de temps ;
- déterminer, sur la base du premier instant et sur la base du deuxième instant, si la deuxième version du signal radioélectrique (231, 232) est un signal de relais (241, 242) généré dans le cadre d'une attaque par relais provenant du signal radioélectrique (231, 232) ou d'une réflexion du signal radioélectrique (231, 232) ; la deuxième version du signal radioélectrique (231, 232) étant déterminée être un signal de relais (241, 242) lorsque la durée est supérieure à la valeur de seuil de temps ; la deuxième version du signal radioélectrique (231, 232) étant déterminée ne pas être un signal de relais (241, 242) lorsque la durée est inférieure à la valeur de seuil de temps ; et
- initier une mesure afin d'empêcher l'accès au système (100) lorsqu'il est déterminé que la deuxième version du signal radioélectrique (231, 232) est un signal de relais (241, 242).
